**Europäisches Patentamt**

**European Patent Office**

**Office européen des brevets**

(11) Numéro de publication : **0 431 316 B1**

(12) # FASCICULE DE BREVET EUROPEEN

(45) Date de publication du fascicule du brevet :
**21.12.94 Bulletin 94/51**

(51) Int. Cl.⁵ : **H04L 12/40**

(21) Numéro de dépôt : **90121033.6**

(22) Date de dépôt : **02.11.90**

(54) **Agencement de résolution de contention pour central téléphonique à petite ou moyenne capacité.**

(30) Priorité : **08.11.89 FR 8914665**

(43) Date de publication de la demande :
**12.06.91 Bulletin 91/24**

(45) Mention de la délivrance du brevet :
**21.12.94 Bulletin 94/51**

(84) Etats contractants désignés :
**AT BE CH DE ES FR GB IT LI NL SE**

(56) Documents cités :
**EP-A- 0 178 205**
**DE-A- 3 736 468**
**FR-A- 2 519 442**

(73) Titulaire : **ALCATEL BUSINESS SYSTEMS**
**12, rue de la Baume**
**F-75008 Paris (FR)**

(72) Inventeur : **Saint Ellier, Pierre**
**37, rue du Bosquet**
**F-67640 Fegersheim (FR)**

(74) Mandataire : **Weinmiller, Jürgen et al**
**Lennéstrasse 9**
**Postfach 24**
**D-82336 Feldafing (DE)**

## Description

La présente invention se rapporte à un agencement de résolution de contention pour central téléphonique, ou système d'intercommunication, à petite ou moyenne capacité, tel qu'un central téléphonique privé. Plus précisément, elle se rapporte à un agencement de résolution de contention intervenant lors de la génération simultanée, par plusieurs interfaces numériques locales aptes à correspondre entre elles, d'une trame numérique sur un bus local situé en fond de panier.

Cette contention est, à l'heure actuelle, classiquement résolue par l'émission, sur un réseau local constitué par un câble, d'une trame de test spéciale, prévue uniquement dans ce but. Il s'ensuit une perte de débit préjudiciable, car il est alors nécessaire d'attendre la transmission d'une trame entière avant de pouvoir transmettre l'information utile.

L'invention vise à remédier à cet inconvénient. Elle se rapporte à cet effet à un dispositif de résolution de contention pour central téléphonique numérique équipé de cartes d'interface qui possèdent chacune un microprocesseur d'entrée/sortie sur un bus local de fond de panier pour la transmission d'information par trames numériques entre cartes, l'accès de chaque interface sur ce bus local étant bidirectionnel et effectué par l'intermédiaire d'un amplificateur BUFFER en collecteur ouvert, ces interfaces étant séquencées par une horloge centralisée et possédant un accès bidirectionnel sur un fil d'occupation afin de le forcer dans un état déterminé en cas de transmission d'une trame sur la ligne, de sorte que le signal sur ce fil d'occupation constitue également un signal de synchronisation de trame. Un tel système est décrit dans EP-A-0 178 205.

Selon une caractéristique de l'invention, le dispositif est équipé de moyens pour fixer pour chaque interface un nombre déterminé de bits de position géographique qui constituent la partie fixe, située en poids forts, d'un module de contention émis par l'interface considérée en tête de trame et pour la durée de la trame pendant laquelle cette interface émet, les bits restants du module de contention, qui sont situés en poids faibles, constituant une partie variable, fonction du nombre de tentatives malchanceuses essayées par l'interface depuis sa dernière émission.

De toute façon, l'invention sera bien comprise, et ses avantages et autres caractéristiques ressortiront, lors de la description suivante d'un exemple de réalisation, en référence au dessin schématique annexe dans lequel :

La figure 1 est un schéma synoptique de la portion d'un central téléphonique privé de moyenne capacité qui permet la mise en oeuvre de cette invention.

La figure 2 montre l'emplacement d'un octet de contention dans une trame, et montre également la forme du signal d'occupation de la ligne de transmission.

La figure 3 montre le principe général d'occupation de la ligne par priorités successives, et

La figure 4 est un diagramme des temps explicatif du procédé conforme à l'invention.

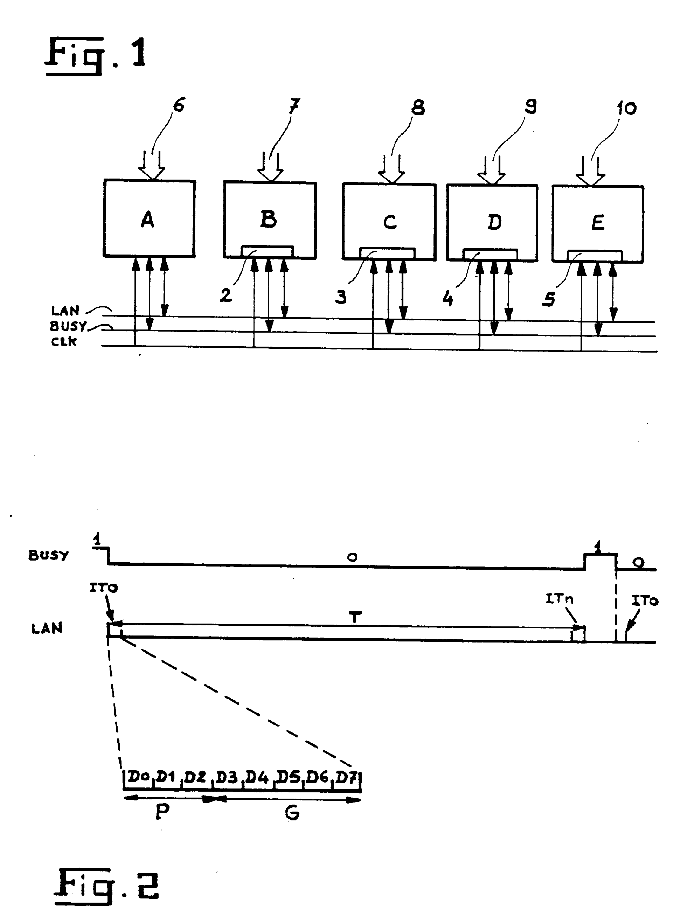

En se référant à la figure 1, il s'agit d'un central téléphonique numérique privé, de moyenne capacité, dont seule une portion est représentée, cette portion comprenant :

- Un ensemble de cartes enfichables A, B, C, D, E,..., dont des cartes de calcul du genre "CPU" (Central Processor Unit), par exemple la carte A, et des cartes "joncteurs" (par exemple les cartes B à E) qui sont liées à des terminaux téléphoniques, éventuellement très divers (non représentés). Chaque carte-joncteurs B, C, D, E est équipée d'un microprocesseur d'entrée/sortie, respectivement 2 à 5, de sorte que les cartes A, B, C..., constituent chacune une interface à microprocesseur de ce type.
- Un bus local d'interconnexion et transmission LAN, constitué par un fil unique, ou lien, bidirectionnel et situé en fond de panier.
- Un fil d'occupation, appelé BUSY, qui est également bidirectionnel et qui permet, de manière connue en soi, d'indiquer aux autres interfaces si le lien de transmission LAN est occupé. Ce fil d'occupation sert aussi de signal de synchronisation de trame.
- Un fil d'horloge CLK qui reçoit son signal en provenance d'un générateur de signal d'horloge centralisé (non représenté), et qui applique ce signal à toutes les interfaces.

Chacune des interfaces A, B, C,..., débite sur la ligne de transmission LAN par l'intermédiaire d'un amplificateur de puissance, ou "BUFFER", du type dit à "collecteur ouvert", ce qui entraîne la propriété, en soi bien connue, suivante :

. si plusieurs interfaces appliquent en même temps, sur la ligne LAN, un signal "1", le signal effectivement apparent sur cette ligne est le signal "1" ;

. si, au contraire, au moins une de ces interfaces applique un signal "0", le signal qui apparaît effectivement sur cette ligne est un "0" : autrement dit, l'émission d'un "0" par une ou plusieurs de ces interfaces a pour résultat de "forcer à zéro" la ligne de transmission.

Par ailleurs, il est affecté, par exemple par des bus d'accès 6 à 10 provenant de l'organe logique central, à chaque carte d'interface A, B, C,..., un nombre binaire représentatif de la position géographique de cette carte : ce nombre binaire, ou position géographique, est donc par définition différent pour chacune des cartes. S'il est supposé par exemple que le nombre de cartes d'interfaces ne dépasse pas 32, les positions géographiques de ces cartes sont codées au moyen de nombres binaires à 5 bits.

Par exemple :

```
0 0 1 0 0        pour la carte A

1 0 0 1 1        pour la carte B

0 1 0 0 1        pour la carte C.
```

En référant maintenant à la figure 2, il est montré que le signal d'occupation BUSY, qui est par définition au niveau 1 lorsque la ligne LAN est libre, est forcé au niveau 0 lors de la transmission d'un message numérique au cours d'une trame T par une des interfaces. Il repasse à 1 lorsque cette ligne est libérée.

Lorsque plusieurs interfaces souhaitent accéder simultanément sur le bus LAN, il y a "collision", et nécessité d'utiliser un dispositif de résolution de contention apte à déterminer le "maître" sur le bus, c'est à dire l'interface qui, bénéficiant de la priorité la plus favorable, est seule autorisée à émettre. Bien entendu, il convient d'autoriser toutes les interfaces à émettre successivement leur message, chacune à leur tour, de sorte que la contention doit définir, pour chaque interface, une priorité qui varie de manière cyclique.

Conformément à l'invention les premiers bits d'une trame constituent un module de contention qui est constitué par exemple par le premier octet ITO de la trame T. Ce module se compose de deux parties :

   . une partie fixe G, située en "poids forts" comme on le voit sur le dessin, et qui est composée de plusieurs bits par exemple les cinq bits $D_3$, $D_4$, $D_5$, $D_6$, $D_7$ qui définissent ensemble un nombre binaire correspondant à la position géographique précitée pour l'interface considérée ; et

   . une partie variable P, située en "poids faibles", qui se compose de plusieurs bits, par exemple les trois bits $D_0$, $D_1$ et, $D_2$ , constituant à eux trois un des huit premiers nombres binaires correspondant aux chiffres décimaux 0 à 7.

Comme chacune des interfaces accède à la ligne LAN grâce à un amplificateur en collecteur ouvert, c'est celle qui émet la première un 0 qui est prioritaire : dans un tel cas, les interfaces qui ont émis en ce même temps un 1 abandonnent immédiatement leur essai d'accès sur la ligne. Si plusieurs interfaces ont émis un 0 en même temps, elles continuent à vouloir forcer l'accès sur cette ligne, jusqu'à ce qu'il n'en reste qu'une seule, ayant alors seule émis un zéro : celle-ci remporte alors la contention, et devient le "maître". Bien entendu, il s'agit là des seules interfaces qui ont un message à émettre et qui sollicitent par la suite l'accès sur le bus.

Comme on le verra ci-après, l'émission au cours d'une trame T par une interface entraîne le passage effectif, après émission du dernier octet ITn, du message de la partie variable P du module de contention, soit par exemple l'octet ITO, à sa valeur qui donne la priorité la plus faible à cette interface, c'est-à-dire la valeur binaire :

   1 1 1

Quant aux interfaces qui sont victimes d'un échec après collision, elles décrémentent, si c'est possible, la valeur binaire du nombre P pour se rapprocher progressivement, après chaque collision malchanceuse, de la valeur qui donne la priorité la plus forte, c'est-à-dire :

   0 0 0

Autrement dit, il y a décrémentation, pour les interfaces victimes d'échecs après collision, allant du nombre binaire correspondant au chiffre 7 au nombre binaire correspond au chiffre 0, soit la séquence suivante :

$$
\begin{array}{ccc}
1 & 1 & 1 \\
1 & 1 & 0 \\
1 & 0 & 1 \\
1 & 0 & 0 \\
0 & 1 & 1 \\
0 & 1 & 0 \\
0 & 0 & 1 \\
0 & 0 & 0
\end{array}
$$

Par ailleurs, le nombre binaire G étant différent pour chaque carte, il s'ensuit que deux cartes différentes n'auront jamais de priorité identique, c'est-à-dire de même nombre ITO dans l'exemple envisagé, et qu'en conséquence la contention est nécessairement résolue après passage du module de contention, c'est-à-dire ici de l'octet de ITO.

Il convient au passage de remarquer que le signal BUSY remonte à la valeur 1 après passage du dernier octet ITn de la trame T d'émission d'un message : cette trame T peut donc être de longueur variable, le signal BUSY constitue ici le signal de synchronisation de trame, ce qui est intéressant en particulier pour obtenir un débit maximal.

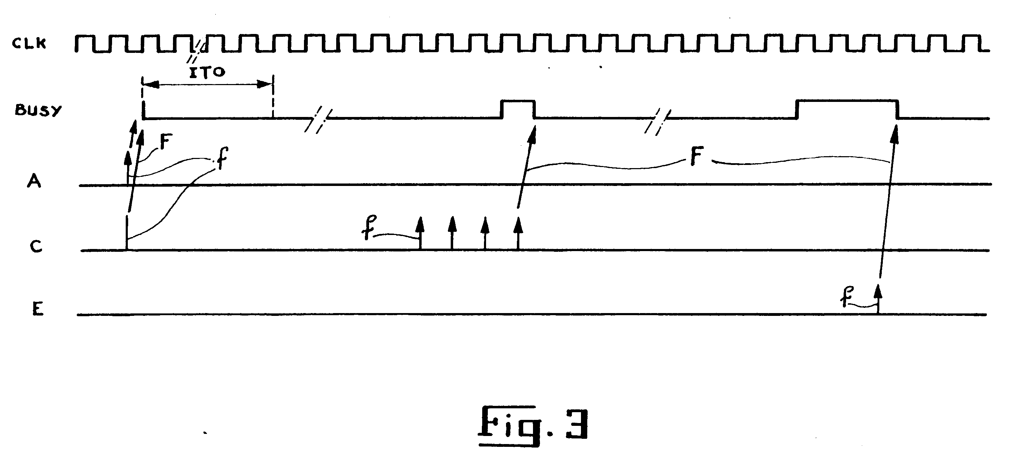

La figure 3 montre le signal centralisé d'horloge CLK, le signal dit BUSY sur le fil de même appellation, et la manière dont celui-ci est activé par les signaux émis par les interfaces A, C, E, par exemple. Sur ce schéma, les opérations de test du fil BUSY sont figurées par des flèches f verticales, tandis que les opérations d'activation de celui-ci sont figurées par des flèches F légèrement obliques.

En partant de la gauche, c'est-à-dire en suivant l'axe des temps, on constate que les interfaces A et C, qui sont chacune prêtes à émettre, testent le fil BUSY (qui, étant porté à l'état 1, est libre) sur les fronts de descente de l'horloge CLK, tandis qu'elles l'activent toutes deux (en le faisant passer à l'état 0) sur un front de montée (le front de montée suivant, si le test est positif).

La contention est résolue par l'octet ITO, et est supposée résolue en faveur de l'interface A.

L'interface C s'est donc retirée de l'action, et elle continue alors à tester le fil BUSY jusqu'à ce que, ce dernier étant revenu à l'état 1, elle puisse l'activer à sont tour.

Il est montré sur ce diagramme comment l'interface E, après passage de l'information émise alors par C, vient tester à son tour le fil BUSY sur un front de descente de l'horloge CLK, pour l'activer à son tour sur le front de montée suivant.

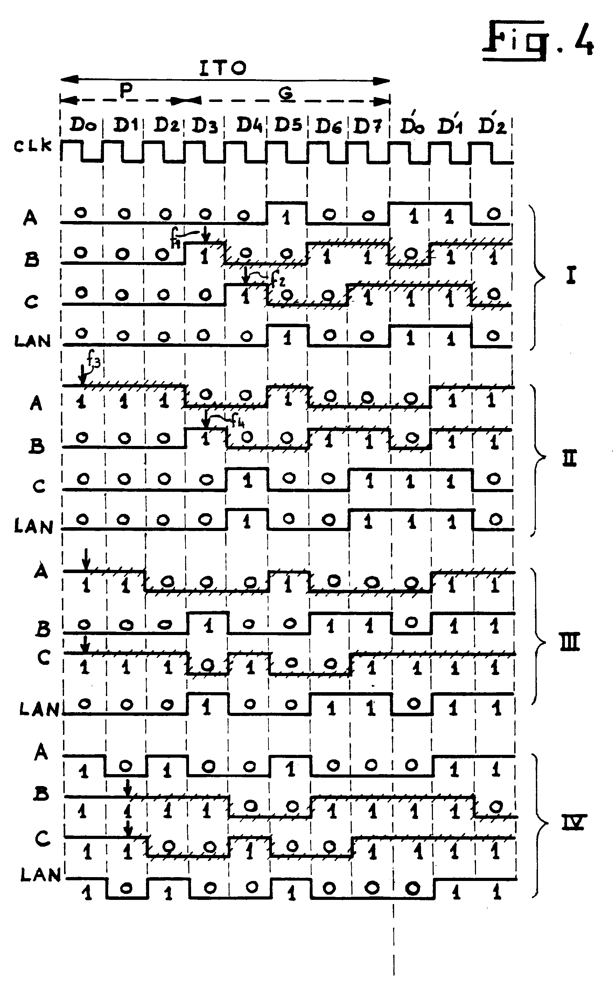

La figure 4 montre un exemple pratique qui va permettre de comprendre parfaitement l'invention.

On est censé, dans cet exemple, se placer à l'initialisation du système, et seules les interfaces A, B, et C sont supposées avoir un message prêt à émettre vers une autre interface.

Du haut en bas sur ce dessin sont représentés :
. Le signal d'horloge centralisée CLK pendant l'émission de l'octet ITO et le début de l'émission du premier octet $D'_0$, $D'_1$, $D'_2$,..., de la trame, cet octet étant alors de manière connue en soi, l'octet de destination ;
. sous l'accolade I : les premiers bits que les interfaces A, B, C souhaitent émettre, et que le maître seul émet effectivement, et le début du signal de trame effectivement émis sur le fil LAN ;
. sous les accolades suivantes II, III, et IV. le même type de signaux que pour la phase I ci-dessus, mais relatives à l'émission des trois trames suivantes respectives.

En se reportant tout d'abord à la phase I, il apparaît qu'à l'initialisation, les bits de priorité variable $D_0$, $D_1$, $D_2$, sont tous trois à zéro pour toutes les interfaces (état "tout zéro"), et définissent donc tous la priorité variable la plus forte : la contention ne peut alors être résolue que par les bits $D_3$, $D_4$, $D_5$, $D_6$, $D_7$ de position géographique G.

Pour l'interface A, la position géographique G est :
00100
et la trame qu'il désire émettre après l'état ITO commence par :
1 1 0 ... ($D'_0$, $D'_1$, $D'_2$,...)

Pour l'interface B, la position géographique G est :
10011
et la trame qu'il vise à émettre après ITO commence
011...

Pour l'interface C, la position géographique est :
01001
et il désire ensuite émettre
110...

Sur le fil LAN apparaît le "canal de retour", c'est-à-dire le signal qui est relu par chacune des interfaces et qui est effectivement émis en ligne.

Après l'émission des trois premiers bits P, A et C émettent (sur le front de montée de l'horloge correspondant au bit $D_3$) tous deux un 0, alors que B émet un 1 : comme on travaille en "collecteur ouvert", le signal effectivement émis sur la ligne LAN est alors un 0.

D'après le principe exposé relativement à la figure 3, la relecture s'effectue sur le front d'horloge descendant suivant, à l'endroit indiqué par la petite flèche $f_1$. L'interface B, qui constate alors que le signal relu n'est pas celui émis, abandonne alors l'action, et cesse d'émettre comme indiqué par les hachures sur le diagramme B. Les deux autres relisent un zéro, et continuent donc à émettre.

Au front de montée d'horloge suivant (en $D_4$), A émet un 0 tandis que C émet un 1 : le fil LAN reçoit un zéro, de sorte qu'à la relecture en $f_2$, l'interface C abandonne à son tour : A reste seul "maître", et continue d'émettre son message sur le fil LAN, jusqu 'à transmission de la totalité de sa trame.

Le fil BUSY revient alors à l'état 1 (en fin de trame), mais est immédiatement testé par B et C, qui désirent toujours émettre leur message, et, dans cet exemple, également par A qui est supposé avoir un autre message à émettre commençant par :
0 1 1 .... ($D'_0$, $D'_1$, $D'2_)$
On vient alors en phase II.

Le signal que désire A est) pour cette phase II, très modifié : non seulement les bits $D'_0$, $D'_1$, $D'_2$... sont changés, mais de surcroît, les trois bits de priorité variable $D_0$, $D_1$, $D_2$ sont entre temps passés à la valeur
1 1 1
qui correspond à la priorité la plus faible.

Les signaux que désirent émettre B et C restent bien entendu inchangés par rapport à la phase I, où B et C ont du se retirer.

En raisonnant comme précédemment, on constate alors que A abandonne en $f_3$, c'est-à-dire sur le front de descente du premier coup d'horloge, tandis que B abandonne en $f_4$ et que C reste finalement le maître.

En passant à la phase III, où C est lui aussi supposé émettre maintenant un autre message, on constate que la priorité variable P de A s'est décrémentée d'une valeur binaire, pour devenir
1 1 0
et que celle de C est à son tour passée à
1 1 1

Il apparaît donc bien qu'en cas de succès après collision, le nombre binaire P passe à sa valeur maximale : 1 1 1, soit "tout un", quelle que soit la valeur des trois bits.

Ceci apparaît encore en phase IV, où le nombre P de B (qui était le maître en phase III) est passé à la valeur 1 1 1 de plus faible priorité, tandis que ceux relatifs à A et C ont tous deux été décrémentés d'une valeur binaire.

Comme il va de soi, l'invention n'est pas limitée à l'exemple de réalisation qui vient d'être décrit. C'est ainsi que les nombres P et G, pourraient être de longueurs différentes : dans le cas d'un nombre d'interfaces supérieur à 32, la position géographique comporterait par exemple six bits, et la priorité variable P deux bits. Au lieu d'un octet en tant que module de contention, un autre ensemble de n bits, pourrait être utilisé dans des configurations particulières. Les bits de position géographique pourraient être fixés par câblage une fois pour toutes, etc...Cette invention utilise un principe simple et tels que les circuits "ASIC", et entraîne de ce fait un prix de revient avantageux.

## Revendications

1. Dispositif de résolution de contention pour central téléphonique numérique équipé de cartes d'interface (A, B, C, D, E,...) qui possèdent chacune un microprocesseur d'entrée/sortie sur un bus local de fond de panier (LAN) pour la transmission d'information par trames numériques (T) entre cartes, l'accès de chaque interface sur ce bus local (LAN) étant bidirectionnel et effectué par l'intermédiaire d'un amplificateur BUFFER en collecteur ouvert, ces interfaces (A, B, C, D, E, ...) étant séquencées par une horloge centralisée (CLK) et possédant un accès bidirectionnel sur un fil d'occupation (BUSY) afin de le forcer dans un état déterminé (0) en cas de transmission d'une trame (T) sur la ligne (LAN), de sorte que le signal sur ce fil d'occupation (BUSY) constitue également un signal de synchronisation de trame, caractérisé en ce qu'il est équipé de moyens (6, 7, 8, 9, 10,...) pour fixer pour chaque interface (A, B, C, D, E,...) un nombre déterminé de bits de position géographique ($D_3$, $D_4$, $D_5$, $D_6$, $D_7$) qui constituent la partie fixe (G), située en poids forts, d'un module de contention (ITO) émis par l'interface considérée en tête de trame et pour la durée de la trame pendant laquelle cette interface émet, les bits restants du module de contention, qui sont situés en poids faibles, constituant une partie variable, fonction du nombre de tentatives malchanceuses essuyées par l'interface depuis sa dernière émission.

2. Dispositif de résolution de contention selon la revendication 1, caractérisé en ce que chaque interface comporte des moyens pour fixer la longueur spécifique de chacune des trames au cours desquelles elle émet.

3. Dispositif de résolution de contention selon la revendication 2, caractérisé en ce que les moyens de fixation de longueur de trame d'une interface sont constitués par un amplificateur de type a collecteur ouvert apte à contrôler le fil d'occupation (BUSY) commun au interfaces.

4. Dispositif de résolution de contention selon la revendication 1, caractérisé en ce que le module de contention est du type octet et permet en conséquence l'émission individuelle de l'interface émettrice dès la fin de l'émission du module de contention pour la durée de trame fixée par cette interface.

5. Dispositif de résolution de contention selon la revendication 1, caractérisé en ce que les interfaces disposent de moyens pour s'attribuer chacune a priorité variable la plus forte en phase d'initialisation.

## Patentansprüche

1. Konfliktauflösungsanordnung für eine digitale Telefonzentrale, die mit Schnittstellenkarten (A, B, C, D, E,...) mit je einem Eingangs-/Ausgangsmikroprozessor zum Zugriff zu einem lokalen Bus (LAN) für die Informationsübertragung in digitalen Rahmen (D) zwischen Karten versehen ist, wobei der Zugriff jeder Schnittstelle auf den lokalen Bus (LAN) bidirektional ist und durch einen Verstärker BUFFER mit offenem Kollektor bewirkt wird, wobei diese Schnittstellen (A, B, C, D, E, ...) durch einen zentralisierten Taktgeber (CLK) getaktet werden und einen bidirektionalen Zugriff auf einen Belegungsdraht (BUSY) haben, um ihn im Falle der Übertragung eines Rahmens (T) über die Leitung (LAN) zwangsweise in einen bestimmten Zustand (O) zu versetzen, derart, daß das Signal auf diesem Belegungsdraht (BUSY) ebenfalls ein Rahmensynchronisationssignal bildet, dadurch gekennzeichnet, daß die Anordnung mit Mitteln (6, 7, 8, 9, 10, ...) zum Festsetzen einer bestimmten Anzahl von die geographische Lage kennzeichneten Bits ($D_3$, $D_4$, $D_5$, $D_6$, $D_7$) ausgerüstet ist, die den an den höherwertigen Stellen befindlichen festen Teil (G) eines Konfliktmoduls (ITO) bilden, der von der betrachteten Schnittstelle am Rahmenanfang und für die Dauer des Rahmens während der Zeitdauer ausgegeben wird, in der die Schnittstelle sendet, während die restlichen Bits des Konfliktmoduls, die an den niedrigerwertigen Stellen liegen, einen variablen Teil in Abhängigkeit von der Anzahl der von der Schnittstelle seit ihrer letzten Sendephase durchgeführten Fehlversuche bilden.

2. Konfliktauflösungsanordnung nach Anspruch 1, dadurch gekennzeichnet, daß jede Schnittstelle Mittel zum Festsetzen der spezifischen Länge jedes Rahmens aufweist, in deren Verlauf die Schnittstelle sendet.

3. Konfliktauflösungsanordnung nach Anspruch 2, dadurch gekennzeichnet, daß die Mittel zur Festsetzung der Rahmenlänge einer Schnittstelle aus einem Verstärker mit offenem Kollektor bestehen, der den den Schnittstellen gemeinsamen Belegungsdraht (BUSY) steuern kann.

4. Konfliktauflösungsanordnung nach Anspruch 1, dadurch gekennzeichnet, daß der Konfliktmodul ein Byte ist und somit das individuelle Senden der sendenden Schnittstelle während der Rahmendauer ermöglicht, sobald die Aussendung des Konfliktmoduls, die durch diese Schnittstelle festgesetzt ist, aufgehört hat.

5. Konfliktauflösungsanordnung nach Anspruch 1, dadurch gekennzeichnet, daß die Schnittstellen über Mittel verfügen, die es ermöglichen, daß sich jede in der Initialisierungsphase die am höchsten gewichtete variable Priorität zuweist.

## Claims

1. Contention resolving device for digital telephone exchanges equipped with interface circuit boards (A, B, C, D, E, etc) each of which has an input/output microprocessor connected to a backplane local bus (LAN) for transmitting information between boards in digital frames (T), each interface having bidirectional access to said local bus (LAN) via an open collector BUFFER amplifier, said interfaces (A, B, C, D, etc) being sequenced by a centralised clock (CLK) and having bidirectional access to a busy wire in order to force it to a particular state ("0") in the event of transmission of a frame (T) on the line (LAN) so that the signal on said busy wire also constitutes a frame synchronisation signal, characterised in that it is equipped with means (6, 7, 8, 9, 10, etc) for fixing for each interface (A, B, C, D, E, etc) a specific number of geographical location bits ($D_3$, $D_4$, $D_5$, $D_6$, $D_7$) which constitute the fixed part (G) at the most significant bit end of a contention module (IT0) sent by the interface in question at the start of the frame and for the duration of the frame during which said interface sends, the remaining bits of the contention module at its least significant bit end constituting a variable part dependent on the number of unsuccessful attempts to send by the interface since its last sending.

2. Contention resolving device according to claim 1 characterised in that each interface comprises means for fixing the specific length of each of the frames during which it sends.

3. Contention resolving device according to claim 2 characterised in that the frame length fixing means of an interface are constituted by an open collector type amplifier adapted to monitor the busy wire common to the interfaces.

4. Contention resolving device according to claim 1 characterised in that the contention module is of the byte type and consequently enables individual sending from the sending interface from the end of sending of the contention module for the frame duration fixed by said interface.

5. Contention resolving device according to claim 1 characterised in that the interfaces each have means for assigning themselves the highest variable priority in an initialisation phase.

# Fig.1

# Fig.2

CLK

ITO

BUSY

F

f

A

C

E

f

F

f

EP 0 431 316 B1

8

**Fig. 3**

Fig.4